Europäisches Patentamt

European Patent Office

Office européen des brevets

(11) Veröffentlichungsnummer: **0 307 772 B1**

(19)

(12) **EUROPÄISCHE PATENTSCHRIFT**

(45) Veröffentlichungstag der Patentschrift: **12.02.92**

(51) Int. Cl.⁵: **B01D  25/12**

(21) Anmeldenummer: **88114575.9**

(22) Anmeldetag: **07.09.88**

(54) Filterpresse mit einer Abspritzeinrichtung für die Filterplatten.

(30) Priorität: **18.09.87 DE 3731353**

(43) Veröffentlichungstag der Anmeldung:
**22.03.89 Patentblatt  89/12**

(45) Bekanntmachung des Hinweises auf die
Patenterteilung:
**12.02.92 Patentblatt  92/07**

(84) Benannte Vertragsstaaten:
**AT BE CH DE ES FR GB IT LI NL SE**

(56) Entgegenhaltungen:
**CH-A- 602 158**
**DE-A- 2 119 296**
**DE-B- 2 119 295**
**FR-A- 2 427 122**
**US-A- 4 448 221**

(73) Patentinhaber: **RITTERSHAUS & BLECHER GMBH**
**Otto-Hahn-Strasse 42**
**W-5600 Wuppertal 21(DE)**

(72) Erfinder: **Heinrich, Hans Jürgen**
**Wilhelmshöher Strasse 129**
**W-5828 Ennepetal(DE)**
Erfinder: **Oelbermann, Max**
**Moltkestrasse 19**
**W-5630 Remscheid(DE)**

(74) Vertreter: **Peerbooms, Rudolf, Dipl.-Phys.**
**Postfach 200 208 Dickmannstrasse 45c**
**W-5600 Wuppertal 2(DE)**

## Beschreibung

Die Erfindung betrifft eine Filterpresse mit einer Abspritzeinrichtung für die auf horizontalen Führungen verschiebbaren Filterplatten, bei welcher mindestens ein mit Spritzdüsen versehenes Spritzrohr jeweils durch Schwenken um eine horizontale Achse zwischen die abzuspritzenden Filterplatten einführbar und in horizontaler Ausrichtung an einer Vertikalführung auf- und abbewegbar geführt ist, welche von einem auf den horizontalen Führungen verfahrbaren Schlitten getragen ist.

Durch die DE-C 2 627 578 ist eine auf den oberen Plattenführungen verfahrbare Abspritzeinrichtung bekannt, welche einen geschlossenen, die oberen Führungen und das Filterplattenpaket umschließenden Rahmen aufweist, an dessen vertikalen Seitenholmen zwei Spritzrohre auf- und abbewegbar geführt sind, die jeweils von unten her zwischen die abzuspritzenden Filterplatten einführbar sind.Diese Abspritzeinrichtung ist aber nicht einsetzbar bei Filterpressen, bei denen die Filterplatten im Bereich ihrer unteren Ecken an Gleit- oder Zugholmen geführt sind.

Eine gattungsgemäße und für diesen Filterpressentyp einsetzbare Abspritzeinrichtung ist durch die DE-A 1 461 447 bekannt, bei welcher das in seiner Arbeitsstellung horizontal ausgerichtete Spritzrohr an einer im wesentlichen aus einer Kolben/Zylinderanordnung bestehenden Vertikalführung auf- und abbewegbar geführt ist, wobei die Vertikalführung in der Arbeitsstellung zwischen den abzuspritzenden Platten angeordnet ist und zwecks Überwechselns zur nächsten abzuspritzenden Filterplatte zusammen mit dem Spritzrohr um eine horizontale Schwenkachse seitlich aus dem Bereich des Filterplattenpaketes herausschwenkbar ist. Die Schwenkachse ist dort im Bereich eines auf den oberen Filterplattenführungen laufenden Schlittens angeordnet. Da dort die gesamte Vertikalführung nach außen verschwenkt wird, ist ein erheblicher Freiraum neben und oberhalb der Filterpresse am Aufstellungsort erforderlich, was entsprechend hohe Gesamtanlagekosten verursacht. Darüber hinaus erfordert die bekannte Vorrichtung verhältnismäßig viele große Bauteile und bedingt damit einen großen technischen Aufwand.

Der Erfindung liegt die Aufgabe zugrunde, eine auch bei Filterpressen mit im Bereich der unteren Filterplattenecken angeordneten Zug- oder Gleitholmen verwendbare Abspritzeinrichtung zu schaffen, die nur einen geringen Freiraum neben der Filterpresse benötigt und aus wenigen, einfachen Bauteilen aufbaubar ist.

Ausgehend von einer Filterpresse der eingangs genannten Art wird die Lösung dieser Aufgabe erfindungsgemäß dadurch erreicht, daß die Vertikalführung gegenüber dem Stapel von Filterplatten nach außen versetzt und starr am Schlitten befestigt ist und daß die Schwenkachse für das Spritzrohr an einem an der Vertikalführung auf- und abbewegbaren Gleitstück angeordnet und das Spritzrohr in eine eng seitlich neben dem Filterplattenstapel liegende Grundstellung zurückschwenkbar ist.

Durch die Erfindung ist eine sehr raumsparende Ausbildung für die Abspritzeinrichtung erreicht, bei der das Spritzrohr in einen von der Vertikalführung ohnehin benötigten, verhältnismäßig schmalen Vertikalraum hineingeklappt wird, so daß am Aufstellungsort nur noch ein geringer Freiraum seitlich neben der Filterpresse für die Unterbringung der Abspritzeinrichtung benötigt wird. Da die Vertikalführung schlittenfest angeordnet ist und nur noch das Spritzrohr verschwenkt wird, kann ein entsprechend schwächerer und damit kleinerer Schwenkantrieb verwendet werden und kann die gesamte Schwenkeinrichtung verhältnismäßig raumsparend dimensioniert werden.

In Ausgestaltung der Erfindung kann das Gleitstück zugleich den Schwenkantrieb zum Verschwenken des Spritzrohres tragen.

Ferner kann der Erfindung zufolge vorgesehen werden, daß das Spritzrohr über einen abgewinkelten, einen im Bereich der unteren Filterplattenecken angeordneten Gleit- oder Zugholm einwärts hintergreifenden Halter mit der Schwenkachse verbunden und bis unterhalb der Gleit- bzw. Zugholme herabbewegbar ist. Durch diese Maßnahme ist es möglich, auch den untersten, zwischen den Gleit- oder Zugholmen liegenden Bereich der Filterplatte voll wirksam abzuspritzen.

Gemäß einer bevorzugten Ausführungsform weist die Abspritzeinrichtung zwei parallele, eine abzuspritzende Platte zwischen sich einfassende Spritzrohr auf, die an ihren Befestigungsenden durch ein mehrfach abgekröpftes, mit der Schwenkachse verbundenes Verlängerungsrohr zu einer schwenkbaren Spritzgabel zusammengefaßt sind, an deren Gabelrücken ein gemeinsamer Spritzwasseranschluß vorgesehen ist.

Weitere Merkmale der Erfindung sind in den Unteransprüchen angegeben.

Die Filterpresse nach der Erfindung wird im folgenden anhand eines in der Zeichnung dargestellten Ausführungsbeispieles näher beschrieben. In der Zeichnung zeigen:

Fig. 1      eine Filterpresse im Querschnitt, mit einer auf den Filterplattenführungen verfahrbaren Abspritzeinrichtung,

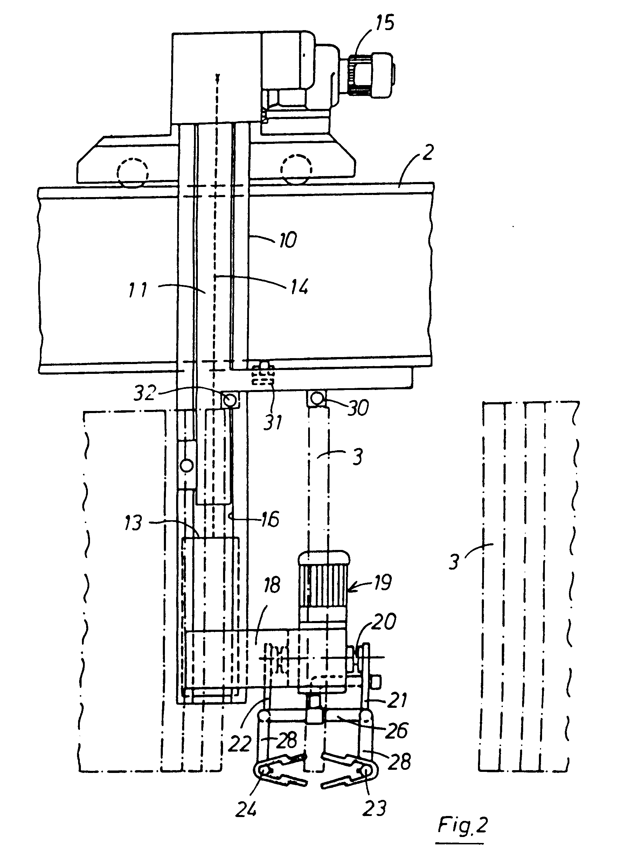

Fig. 2      eine Seitenansicht auf die Filterpresse und Abspritzeinrichtung, in Fig. 1 von rechts gesehen,

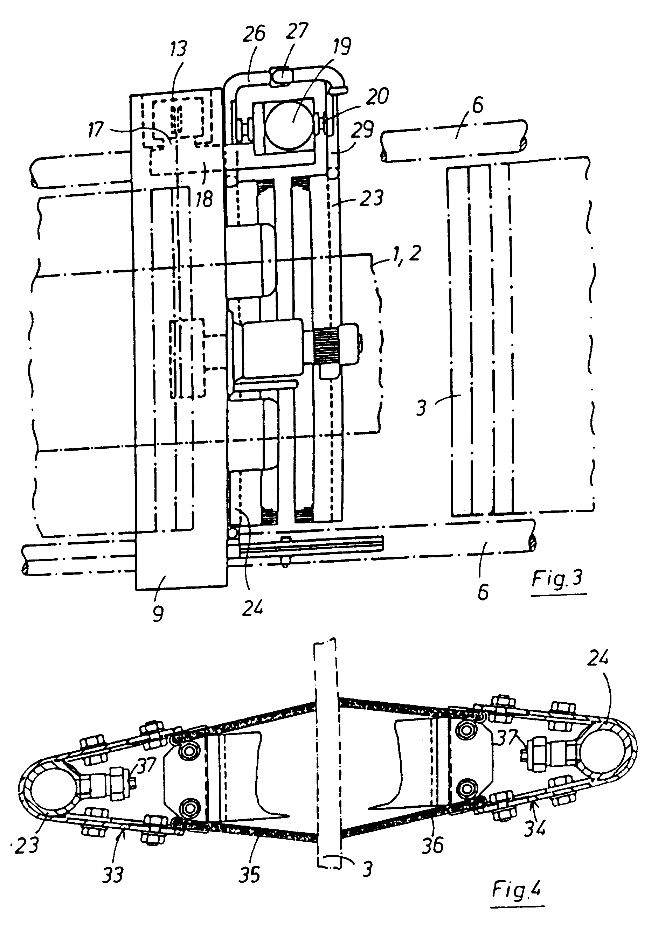

Fig. 3      eine Draufsicht auf die Abspritzeinrichtung und

Fig. 4      einen Schnitt gemäß der Linie IV-IV in Fig. 1.

Die Filterpresse weist zwei horizontale Führungen 1, 2 in Form von Doppel-T-Trägern auf, an deren unteren, inneren Flanschen ein Stapel von Filterplatten 3 über Rollen 4 verfahrbar aufgehängt ist. Jede Filterplatte 3 ist an den unteren Ecken mit Augen 5 versehen, die von Zugholmen 6 durchsetzt sind.

Auf den oberen Führungen 1, 2 ist ein Schlitten 7 verfahrbar, der eine Plattenabspritzeinrichtung 8 trägt. Der mit dem Schlitten 7 starr verbundene Rahmen der Abspritzeinrichtung umfaßt einen oberen, kastenförmigen Querholm 9, an dessen einem Ende eine Vertikalführung 10 in Form eines kastenförmigen Seitenholmes und an dessen gegenüberliegenden Ende ein vertikaler Tragarm 11 für eine Schalterleiste 12 befestigt sind. Die Vertikalführung 10 erstreckt sich eng neben dem Paket von Filterplatten 3 herab und endet kurz oberhalb eines der Holme 6. Innerhalb der kastenförmigen Vertikalführung 10 ist ein Gleitstück 13 geführt, das über ein Zugseil 14 an einem am Querholm 9 angeordneten Antrieb 15 angeschlossen ist. Die Vertikalführung 10 ist an ihrer dem Filterplattenstapel 3 zugewandten Seite mit einem Längsschlitz 16 versehen, durch den ein seitlicher Ansatz 17 des Gleitstückes 13 herausragt, an welchem ein Tragarm 18 befestigt ist, der parallel zu Filterpressen-Längserstreckung gerichtet ist. Am Tragarm 18 ist ein Schwenkantrieb 19 zum Antrieb einer horizontalen Schwenkachse 20 abgestützt, die beispielsweise über ein Kegelradgetriebe mit der vertikalen Motorwelle des oberhalb der Schwenkachse 20 angeordneten Motors des Schwenkantriebes 19 gekuppelt ist. Die Schwenkachse 20 ist in ihrem mittleren Bereich an den Abstützelementen des Schwenkantriebes 19 drehbar gelagert und trägt an ihren beiden Enden je einen Schwenkhebel 21, 22.

Die jeweils abzuspritzende, innerhalb des Filterplattenpaketes entsprechend vereinzelte Filterplatte 3 ist zwischen zwei parallelen Spritzrohren 23, 24 eingefaßt, die an ihrem der Schwenkachse 20 zugeordneten Ende über ein mehrfach abgekröpftes Verlängerungsrohr 25 zu einer Gabel zusammengefaßt sind, an deren Gabelrücken 26 ein gemeinsamer Spritzwasseranschluß 27 vorgesehen ist.

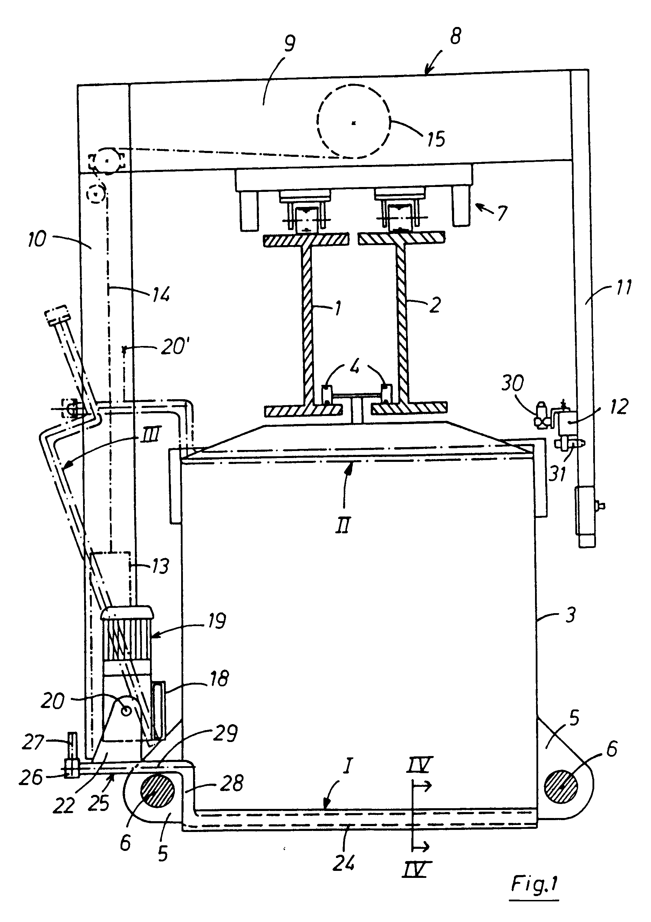

Bei der in Fig. 1 in ausgezogenen Linien gezeigten Stellung I sind die Spritzrohre 23, 24 horizontal ausgerichtet und liegen sie unterhalb der von den Holmen 6 definierten Horizontalebene. Ihr Verlängerungsrohr 25 weist zunächst rechtwinklig nach oben abgewinkelte Abschnitte 28 und daran anschließend jeweils horizontal nach außen gerichtete Abschnitte 29 auf, die an den freien Enden der Schwenkhebel 21, 22 befestigt sind. Die Abschnitte 28, 29 und die Schwenkhebel bilden somit einen mehrfach abgekröpften Halter 28, 29, 21, 22, welcher den einen Zugholm 6 einwärts derart hintergreift, daß die Spritzrohre 23, 24 bis zum unteren Plattenrand herabgeführt werden können.

Beim Abspritzen einer Filterplatte werden die Spritzrohre 23, 24 zwischen der in Fig. 1 in ausgezogenen Linien dargestellten untersten Stellung I und der in strichpunktierten Linien dargestellten obersten Stellung II mittels des Antriebs 15 auf- und abbewegt, so daß die Filterplatten 3 vollflächig an beiden Seiten abgespritzt werden. Beim Überwechseln auf eine nächste abzuspritzende Filterplatte 3 werden die Spritzrohre 23, 24 aus ihrer oberen Stellung II um die dann in Position 20' befindliche Schwenkachse 20 nach unten geschwenkt in die ebenfalls durch strichpunktierte Linien dargestellte Stellung III, bei der die Spritzrohre nunmehr vollständig aus dem Filterplattenstapel herausgeschwenkt sind und im wesentlichen in dem Vertikalraum liegen, der von der Vertikalführung 10 als Freiraum neben dem Filterplattenstapel benötigt wird. Mittels an der Schalterleiste 12 vorgesehener Näherungsschalter 30, 31, 32 kann dabei jeweils die Stellung der abzuspritzenden Filterplatte 3 relativ zur Abspritzeinrichtung 8 und die Annäherung der Spritzrohre in ihre obere Stellung II erfaßt und ein automatischer Ablauf des Abspritzvorganges gesteuert werden.

Wie aus Fig. 4 noch ersichtlich ist, sind die Spritzrohre 23, 24 jeweils am Grund eines etwa V-förmigen Spritzgehäuses 33, 34 angeordnet, an dessen Ränder elastische, an der abzuspritzenden Platte 3 anliegende Spritzraumabdeckungen 35, 36, z.B. in Form von Bürsten oder Lappen, angebracht sind. Die Spritzrohre sind jeweils mit einer Vielzahl von Flachstrahldüsen 37 bestückt, die senkrecht auf die abzuspritzende Platte gerichtet sind.

## Patentansprüche

1. Filterpresse mit einer Abspritzeinrichtung (8) für die auf horizontalen Führungen (1, 2) verschiebbaren Filterplatten (3), bei welcher mindestens ein mit Spritzdüsen versehenes Spritzrohr (23, 24) jeweils durch Schwenken um eine horizontale Achse (20) zwischen die abzuspritzenden Filterplatten einführbar und in horizontaler Ausrichtung an einer Vertikalführung (10) auf- und abbewegbar geführt ist, welche von einem auf den horizontalen Führungen verfahrbaren Schlitten (7) getragen ist, dadurch gekennzeichnet, daß die Vertikalführung (10) gegenüber dem Stapel von Filterplatten (3) nach außen versetzt und starr am Schlitten (7) befestigt ist und daß die Schwenkachse (20) für das Spritzrohr (23, 24) an einem an der Vertikalführung (10) auf- und abbewegbaren Gleitstück (13) angeordnet und das Spritzrohr in eine eng seitlich neben dem Filterplattenstapel liegende Grundstellung (III) zurückschwenkbar ist.

2. Filterpresse nach Anspruch 1, dadurch gekennzeichnet, daß das Gleitstück (13) einen Schwenkantrieb (19) zum Verschwenken des Spritzrohres (23, 24) trägt.

3. Filterpresse nach den Ansprüchen 1 und 2, dadurch gekennzeichnet, daß das Spritzrohr (23, 24) über einen abgewinkelten, einen im Bereich der unteren Filterplattenecken angeordneten Gleit- oder Zugholm (6) einwärts hintergreifenden Halter (28, 29, 21, 22) mit der Schwenkachse verbunden und bis unterhalb der Gleit- bzw. Zugholme herabbewegbar ist.

4. Filterpresse nach den Ansprüchen 1 bis 3, dadurch gekennzeichnet, daß das Spritzrohr (23, 24) bei hochgefahrenem Gleitstück (13) nach unten aus dem Filterplattenpaket herausschwenkbar ist.

5. Filterpresse nach den Ansprüchen 1 bis 4, dadurch gekennzeichnet, daß die Abspritzeinrichtung (8) zwei parallele, eine abzuspritzende Platte (3) zwischen sich einfassende Spritzrohre (23, 24) aufweist, die an ihren Befestigungsenden durch ein mehrfach abgekröpftes, mit der Schwenkachse (20) starr verbundenes Verlängerungsrohr (25) zu einer schwenkbaren Spritzgabel zusammengefaßt sind, an deren Gabelrücken (26) ein gemeinsamer Spritzwasseranschluß (27) vorgesehen ist.

6. Filterpresse nach Anspruch 5, dadurch gekennzeichnet, daß das Gleitstück (13) einen parallel zur Filterplattenlängsachse gerichteten Tragarm (18) besitzt, an welchem die Spritzrohre(23, 24) samt ihrem Schwenkantrieb (19), in Filterpressenlängsrichtung versetzt gegenüber der Vertikalführung (10), angeordnet sind.

7. Filterpresse nach einem der Ansprüche 1 bis 6, dadurch gekennzeichnet, daß die Spritzrohre (23, 24) jeweils am Grund eines etwa V-förmigen Spritzgehäuses (33, 34) angeordnet sind, an dessen Ränder elastische, an der abzuspritzenden Platte (3) anliegende Spritzraumabdeckungen (35, 36), z.B. in Form von Bürsten oder Lappen, angebracht sind.

8. Filterpresse nach einem der Ansprüche 1 bis 7 dadurch gekennzeichnet, daß die Abspritzeinrichtung (8) an der der Vertikalführung (10) gegenüberliegenden Seite einen bis an die Filterplatten (3) hinabreichenden Tragarm (11) für eine Schalterleiste (12) aufweist, welche mit Näherungsschaltern (30, 31, 32) zur Erfassung der abzuspritzenden Filterplatte (3) und des bzw. der bis in die obere Endstellung (II) hochgefahrenen Spritzrohre (23, 24) bestückt ist.

## Claims

1. Filter press with spraying device (8) for the filter plates (3) which are moveable along horizontal guides (1, 2), in which at least one spray pipe (23, 24) equipped with spray nozzles is directed by rotation around a horizontal axis (20) so as to be insertable between the filter plates to be sprayed and so as to be moveable, while horizontally arranged, up and down a vertical guide (10) carried by a cradle (7) moveable on the horizontal guides, characterized in that the vertical guide (10) is off-set outwards with respect to the filter plate (3) pack and is rigidly fixed to the cradle (7) and in that the rotation axis (20) for the spray pipe (23, 24) is arranged on a sliding piece (13), moveable up and down the vertical guide (10) and in that the spray pipe may be rotated back into a basic position (III) lying close beside the filter plate pack.

2. Filter press as claimed in Claim 1, characterized in that the sliding piece (13) carries a rotatory drive (19) for rotation of the spray pipe (23, 24).

3. Filter press as claimed in Claims 1 and 2, characterized in that the spray pipe (23, 24) is connected to the rotation axis via an angled holder (28, 29, 21, 22) engaging inwards behind a sliding- or tie-rod (6) in the area of the lower corners of the filter plate and is moveable downwards to below the sliding- or tie-rods.

4. Filter press as claimed in Claims 1 to 3, characterized in that the spray pipe (23, 24) may be rotated downwards out of the filter plate pack when the sliding piece (13) is at its highest point.

5. Filter press as claimed in Claims 1 to 4, characterized in that the spraying device (8) has two parallel spray pipes (23, 24), containing between them a plate (3) to be sprayed, which are fastened to a rotatable spraying fork by a multiply bent extension pipe (25) rigidly connected to the rotatory axis (20), while on the reverse side (26) of the fork a joint waterconnection (27) is provided.

**6.** Filter press as claimed in Claim 5, characterized in that the sliding piece (13) has a carrying arm (18) directed parallel to the longitudinal axis of the filter plates, on which the spray pipes (23, 24), together with their rotary drive (19) are arranged in the longitudinal direction of the filter press, offset with respect to the vertical guide (10).

**7.** Filter press as claimed in one of Claims 1 to 6, characterized in that the spray pipes (23, 24) are each arranged at the bottom of a roughly V-shaped spray housing (33, 34) to whose edges elastic covers (35, 36), for example in the form of brushes or cloths, for the spraying cavity are attached, which lie on the plate to be sprayed (3).

**8.** Filter press as claimed in one of Claims 1 to 7, characterized in that the spraying device (8) has on the side opposite the vertical guide (10) a carrying arm (11) reaching down to the filter plates (3) for a switch-strip (12), equipped with proximity switches (30, 31, 32) for taking hold of the filter plate (3) to be sprayed and of the spray pipe or pipes (23, 24) when these are raised to the upper stop position (II).

**Revendications**

**1.** Filtre-presse, ayant un dispositif de nettoyage au jet (8) pour les plaques de filtre (3) déplaçables sur des guidages horizontaux (1, 2), dans lequel au moins un tuyau à buses (23, 24) pourvu de buses, est susceptible d'être introduit, par pivotement autour d'un axe horizontal (20), entre les plaques de filtre à laver, et guidé de façon à pouvoir monter et descendre, en étant orienté horizontalement, sur un guidage vertical (10) porté par un chariot (7) déplaçable sur les guidages horizontaux, caractérisé en ce que le guidage vertical (10) est décalé vers l'extérieur, par rapport au paquet des plaques de filtre (3) et fixé rigidement sur le chariot (7), et en ce que l'axe de pivotement (20) du tuyau à buses (23, 24) est disposé sur une pièce coulissante (13) déplaçable sur le guidage vertical (10), de façon à pouvoir monter et descendre, et le tuyau à buses étant rétractable en une position de base (III) situé latéralement, très près du paquet de plaques de filtres.

**2.** Filtre-presse selon la revendication 1, caractérisé en ce que la pièce coulissante (13) porte un mécanisme de pivotement (19), pour faire pivoter le tuyau à buses (23, 24).

**3.** Filtre-presse selon les revendications 1 et 2, caractérisé en ce que le tuyau à buses (23, 24) est relié à l'axe de pivotement, par l'intermédiaire d'un support coudé (28, 29, 21, 22), saisissant par l'intérieur une barre de coulissement ou de traction (6) disposé dans la zone des angles inférieurs de plaque, et est abaissable jusqu'au dessous des barres de coulissement, respectivement de traction.

**4.** Filtre-presse selon les revendications 1 à 3, caractérisé en ce que le tuyau à buses (23, 24) est pivotant vers le bas, à l'écart du paquet de plaques de filtre, lorsque la pièce coulissante (13) est en position haute.

**5.** Filtre-presse selon les revendications 1 à 4, caractérisé en ce que le dispositif de nettoyage au jet (8) présente deux tuyaux à buses (23, 24) parallèles, entourant entre eux une plaque (3) à asperger, qui sont assemblés à leurs extrémités de fixation au moyen d'un tube de prolongement (25) à coudure multiple, relié rigidement à l'axe de pivotement (20), l'assemblage donnant une fourche d'aspersion pivotante aux dos de fourche (26) de laquelle est prévu un raccord d'eau d'aspersion (27) commun.

**6.** Filtre-presse selon la revendication 5, caractérisé en ce que la pièce coulissante (13) comporte un bras support (18), orienté parallèlement à l'axe longitudinal des plaques de filtre, sur lequel les tuyaux à buses (23, 24) avec leur mécanisme de pivotement (19), sont disposés suivant la direction longitudinale du filtre-presse, en étant décalés par rapport au guidage vertical (10).

**7.** Filtre-presse selon l'une des revendications 1 à 6, caractérisé en ce que les tuyaux à buses (23, 24) sont chacun disposés au fond d'un carter d'aspersion (33, 34) à peu près en fome de V, sur les bords élastiques duquel sont montés des recouvrements de l'espace d'aspersion (35, 36) élastiques, qui appuient sur la plaque (3) à asperger.

**8.** Filtre-presse selon l'une des revendications 1 à 7, caractérisé en ce que le dispositif de nettoyage au jet (8) présente sur le côté opposé au guidage vertical (10) un bras support (11), atteignant les plaques de filtre (3), pour une bande à interrupteurs (12), qui est équipée de détecteurs de proximité (30, 31, 32) pour capter la présence de la plaque de filtre (3) à asperger et la position haute prise par le ou les tuyaux à buses (23, 24) lorsqu'ils sont en position finale supérieure (II).

*Fig.1*

Fig.2

Fig.3

Fig.4